# EUROPEAN PATENT APPLICATION

(11) **EP 1 619 483 A2**
(43) Date of publication of application: **25.01.2006**
(21) Application number: 05015195.0
(22) Date of filing: 13.07.2005
(51) Int. Cl.: G01G 21/24

(54) **Load sensor**

(30) Priority: 14.07.2004 EP 04425523
(71) Applicant: Thermo Ramsey Italia S.r.l., 20090 Rodano (MI) (IT)
(72) Inventor: Cavenago, Roberto, 20037 Paderno Dugnano (MI) (IT); Gherlinzoni, Massimo, 20052 Monza (IT)
(74) Representative: Gislon, Gabriele

(57) **Abstract**

The present invention relates to a load sensor provided with a structure deformable in relation to the weight of a load applied to an element thereof. A load cell supplies an electrical signal which is a function of the stress transmitted thereto by the structural element to which the weight is applied. Advantageously, the structural elements composing the structure of the load sensor are produced with plates or sections, made of metal without welds. Preferably, the metal is stainless steel.

## Description

The present invention relates to a load sensor, in particular to measure the weight of both static and moving loads.

Several different types of load sensing devices are available on the market. Some sensors provide measurement of the weight of static loads, others provide measurement of the weight of moving loads and yet others still are suitable to measure the weight of loads both static and moving with respect to the measuring device. The invention relates to this last category of load sensing devices. Some traditional sensors of this lost type use transducers capable of producing an electric signal as a function of the amount of stress (compression and/or traction and/or bending) to which they are subjected. Among the most widely used transducers are load cells.

For example, US patent 5,337,618 relates to a load sensor, in particular to measure the weight of a load moved by a conveyor belt, provided with a structure deformable in response to the weight to be measured. The deformable structure receives stress from the conveyor belt and transmits only the vertical component of this stress to a load cell. The cell is then loaded and provides an electric signal which is a function of the amount of bending and, consequently, of the weight applied to the sensor. The load sensor can be coupled, by means of screws, to pre-existing movement systems.

Conventional load sensors, equivalent or similar to the sensor in US patent 5,337,618 have a series of drawbacks. In the first place, the structural elements of known sensors are, in general, bulky and heavy. Consequently, the load sensors as a whole are bulky and heavy and therefore difficult to handle, with evident negative effects on the time required to install the sensors in the systems or machinery with which they must be associated. The structural elements are generally produced by aluminium casting. Further processing, such as drilling, filing, surface machining, etc., is therefore required on these elements to complete assembly of the sensor. Specialized technicians are often required to perform finishing processes, thereby causing an increase in the production costs of the sensor. Moreover, any errors in the finishing operations increase the possibilities of breakage of the structural elements. For example, imprecise drilling, or performed at unsuitable points of a given structural element can jeopardize the mechanical resistance and cause yielding when the element is subjected to stresses.

Many conventional load sensors, such as those provided with aluminium structural elements, cannot be used in systems for the processing of biodegradable or food substances. In fact, current regulations in many countries establish that machinery used to treat these types of substance must be subjected to frequent washing with detergents, for example with high pressure jets of a mixture of water and aggressive detergents. Aluminium, typically used to produce load sensors installable on pre-existing machinery, can in fact be corroded by detergents and promotes modifications of the biodegradable substances deposited in contact therewith.
For this application, specific steel load sensors of large dimension are known, incorporated in the moving systems. Typically, these load sensors are provided with a fixed frame, integral with the structure of the system to move the substances and having essentially the same overall dimensions as said system, and with a movable frame hinged thereto. The movable frame transfers the stresses of the moving system, for example a conveyor belt, to a load cell. This type of sensor requires specific design so that each sensor is compatible with the moving system with which it is to be associated only and an existing machine cannot be fit with a standard load sensor.

The object of the present invention is to provide a load sensor which solves, in a simple and inexpensive way, the drawbacks relative to conventional load sensors.

Another object of the present invention is to provide a load sensor that is compact, light and easy to handle and to install on pre-existing equipment even if this equipment is to be used in the processing of food or biodegradable substances.

A further object of the present invention is to provide a load sensor on which it is simple to perform maintenance and which is easily subjected to hygienizing treatments when installed on equipment.

These and other objects are obtained with the present invention which relates to a load sensor according to claim 1.

The load sensor according to the invention provides for two structural elements made of bent metal sheets or metal draw that are connected by means of two (or more) blades, i.e. lamina or flexible elements that connect upper and lower engaging portions of the structural elements. The engaging portions of one of the blades, preferably of the lower blade (i.e. lower with respect to the load) are at least in part superimposed and spaced apart along a vertical plane of the sensor assembly.

The load sensor according to the present invention can be used both as a weight measuring device (weighing scales) for static loads, and as a weight measuring device for moving loads. In the first case, the load is static and is applied directly to the second structural element. In the second case the load is in movement with respect to the second structural element, for example the sensor which reads the weight of a load which, at a given instant, is moved by a belt which rests, while running, on top of said structural element.

Advantageously, the load sensor according to the invention has two structural elements made of bent metal sheets, i.e. made of plates, or made of metal draw pieces, i.e. sections or structural bars, without welds and can therefore achieve a much greater rigidity than conventional structural elements produced by aluminium casting. Moreover, the plates or sections are extremely simple to handle and allow considerable reduction in the time required to assemble the load sensor with respect to the time required for assembling conventional structural elements. Furthermore, the structural elements of the load sensor of the invention do not require further processing and/or machining, but can be assembled directly, with resulting savings in time and costs. For example, the plates or sections can be produced with the bores required for assembly and installation of the sensor.

Moreover, the size of the load sensor, for a same weight range, is less than the size of corresponding known, conventional sensors.

The first structural element and the second structural element are shaped so that, when they are coupled, the portions of the flexible elements coupled to the first structural element are fixed and the portions of the flexible elements coupled to the second structural element move on the aforesaid vertical plane essentially by the some amount.

According to one embodiment of the present invention, at least one structural element has, on said vertical plane, a C-shaped profile.

According to another embodiment of the invention one or both structural elements have lateral walls.

According to a further embodiment of the invention one structural element has, along said vertical plane, an S-shaped profile.

As above mentioned a first flexible element, i.e. a blade, connects the two lower engaging portions. A second flexible element couples together the upper portions of the first and of the second structural element. The first and the second flexible element are mounted parallel to each other, while the first and the second structural elements are coupled opposed. Being elastically deformable, the flexible elements allow the second structural element to move solely in a direction parallel to the first structural element. When the sensor is not stressed by a weight, the flexible elements return the second structural element to its initial position.

The load sensor may have one or more spacers made of metal, interposed between the structural elements and the flexible elements. The spacers allow a simple assembly of the load sensor, so that the lower and upper portions of the two structural elements are essentially parallel when the flexible elements are not subjected to bending stress by the load applied to the second structural element.

In one embodiment of the invention, the lower blade is external and directly mounted on the engaging portions. To obtain this arrangement, the lower engaging portions of the first, i.e. fixed, structural element is provided with an extension having a vertical and an horizontal part that replace the use of a spacer; the other corresponding engaging portions of the second, i.e. vertically moving, structural element is a block extending between the two lateral walls or sides of said second structural element, at the same level as the said horizontal part of lower engaging portions of the first structural element.

Preferably, the structural elements are made of a metal. In this case the metal used to manufacture the structural elements, and optionally the spacers, can be steel. The steel is preferably stainless steel, according to standard AISI 304 or standard AISI 400.

Alternatively, the metal can be any type equivalent to stainless steel. What matters is that the metal is resistant to detergents, solvents and to jets of pressurized fluids. This characteristic allows the production of load sensors responding to the strict hygiene regulations for food processing systems. In fact, the load sensors of the invention can be washed with the detergents normally used in the field, even with pressurized jets of detergent fluids. Moreover, the metal is appropriately chosen so that it does not promote modifications of biodegradable substances that may have deposited on the sensor.

The load sensor can also be used in sectors different to those relative to the processing of biodegradable substances. For example, it can be used in systems for moving and/or processing of materials of various types, such as coal, gravel, sand, etc..

According to a preferred aspect of the present invention, the flexible elements are annealed steel sheets obtained through laser cutting processes.

Further features of the invention shall become apparent and evident from the detailed description of a preferred, although non-exclusive, embodiment, of a load sensor according to the invention, shown as a non-limiting example, in the attached drawings, wherein:
- Figure 1 shows a perspective view of a sensor according to the invention;
- Figure 2 is a side view of the sensor in Figure 1;
- Figure 3 is a sectional view of the sensor in Figure 2, considered along the line A-A;
- Figure 4 is a top view of the sensor in Figure 1;
- Figure 5 is a bottom view of the sensor in Fgure 1;
- Figure 6 is a front view of the sensor in Fgure 1;
- Figure 7 is a rear view of the sensor in Figure 1;
- Figure 8 is a side view of the sensor in Figure 1 fitted to an external body and subject to a weight P;
- Figure 9 is a perspective view from below of another embodiment of the invention;
- Figure 10 is a perspective view from above of the embodiment of fig. 9; and
- Figure 11 is a sectional view along a vertical plane of the embodiment of fig. 9.

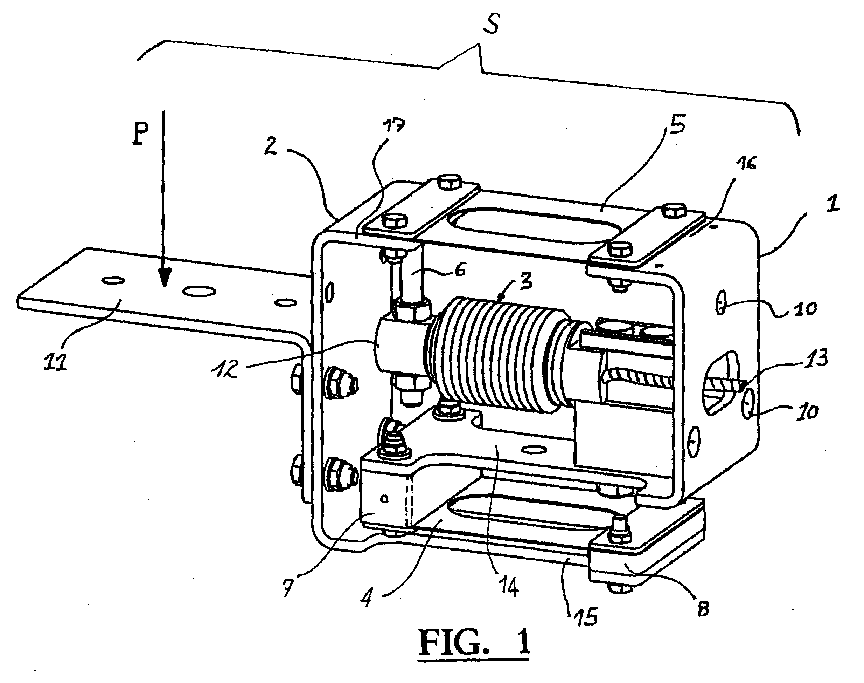

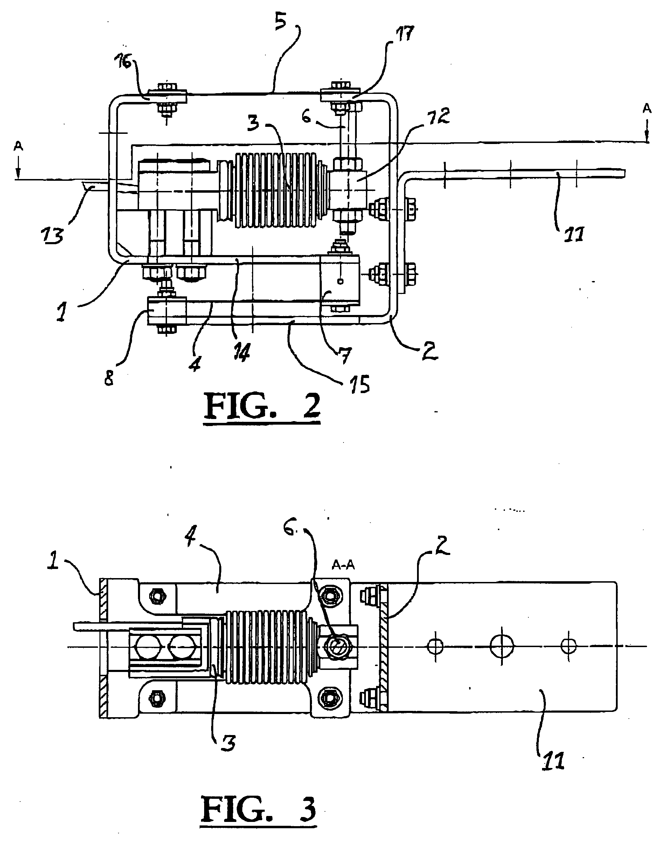

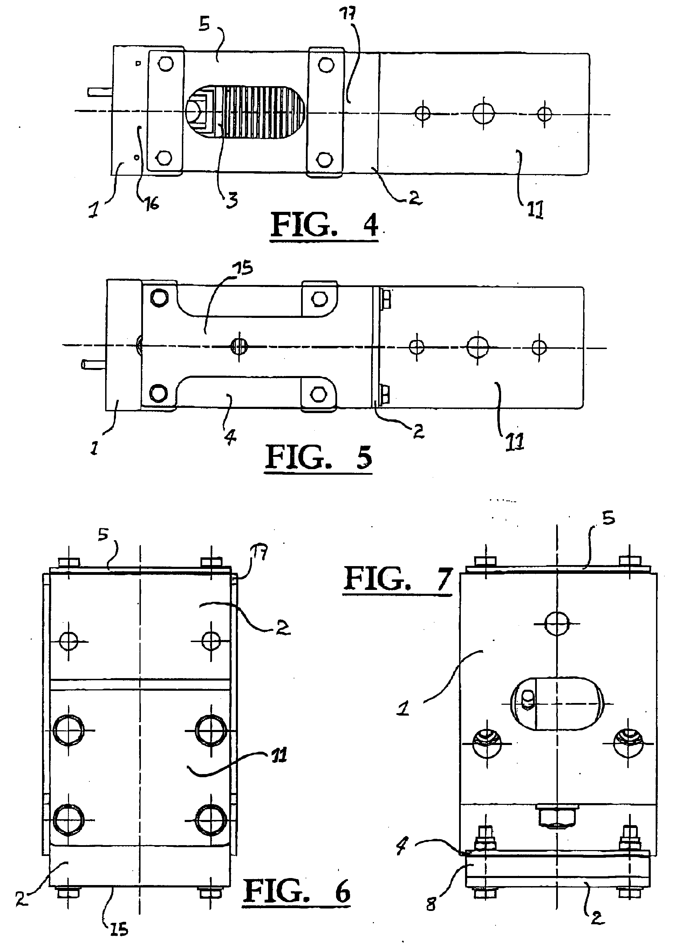

Figures 1-7 show a first embodiment of the load sensor according to the present invention.

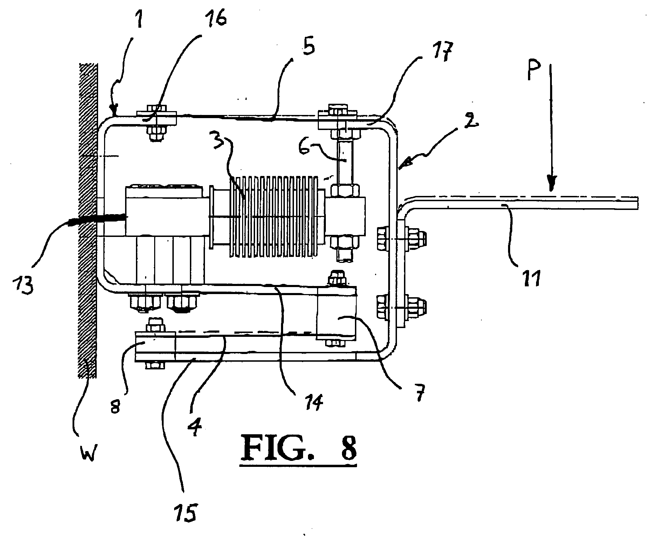

The sensor comprises a first rigid structural element 1 and a second rigid structural element 2 coupled to the first in a movable way in response to the weight of a load to be measured, that is transmitted to said second element, In the embodiment shown, the load sensor S comprises a first rigid structural element 1, connectable to a supporting body W (fig.8), and a second structural element 2, also rigid, coupled to the first element 1 by flexible means i.e. by blades 4 and 5.

Advantageously, and differently to prior art load sensors, the structural elements 1 and 2 are obtained from one or more bent plates or metal sections.

The element 1 is coupled to an external supporting body, for example the frame of a conveyor belt, by means of screws, bolts and nuts or equivalent means. For this reason element 1 is provided with fixing holes 10 that are obtained during the production steps.

The element 2 will be stressed, directly or indirectly, by the weight P of a load to be measured. In the embodiment shown, element 2 is associated with a shelf 11 attached thereto. When sensor S is set up, the shelf 11, or alternatively a portion of said structural element 2, is loaded with the weight P which may be of the static type or may be variable in time. In the second case, a conveyor belt which moves a load of flour, gravel, coal, etc, will run on shelf 11.

The element 2 is connected to element 1 by means of at least two flexible elastic elements. In the embodiment shown the flexible elements are two blades 4 and 5. When a weight, represented by the vector P, acts on the structural element 2, blades 4 and 5 are elastically deformed, bending, and allowing element 2 to move with respect to the element 1 solely on a vertical plane, for example on a plane orthogonal to the upper surface of the shelf 11. This vertical plane contains the vector P and the axis of the load cell 3. For example, element 2 can move on said vertical plane along a direction parallel to the direction of the weight P. When element 2 is not subjected to stresses, blades 4 and 5 return element 2 to its initial position.

The load cell 3 is integral with the first structural element 1 and is stressed by element 2 when the latter is subjected to weight P. In the shown embodiment, the load cell 3 is cantilever coupled with element 1 and has a free end 12 facing element 2. Connected to said end 12 is a feeler 6 having the function of transmitting the movements of the structural element 2 to the load cell 3 which generates an electric signal proportional to the amount of the measured movement. The electric signal is sent through cable 13.

Structural elements 1 and 2 have, on a vertical plane, a C-shaped profile. The lower portion of structural element 1 is referred to with reference number 14, while the lower portion of structural element 2 is indicated with reference number 15. These lower portions form the engaging portions for the lower blade.

The elements 1 and 2 shown in Figure 1 have an asymmetrical C-shaped profile, as the lower portion 14, 15 of each structural element 1 or 2 is longer than the corresponding upper portion 16, 17. The lower portions, i.e. the engaging portions 14 and 15 for blade 4, can have different shapes from those shown in figures 1-8 and can engage, directly or Indirectly through a spacer, with blade 4.

As can be seen, elements 1 and 2 are opposed, The aforesaid engaging portions 14 and 15, coupled by means of the blade 4, are in part superimposed, while the upper portions 16 and 17, coupled through the blade 5, face each other. Thanks to this configuration, when a weight P is applied to the sensor S, the blades 4 and 5 bend in the opposite directions and the structural element 2 is guided to move parallel to the structural element 1, as shown in Figure 8. Figure 8 shows the sensor S integral with a surface w and subjected to a load P: the dashed lines indicate the position at rest of the components of the sensor S with respect to the position induced by the load P.

The lower, engaging portions 14 and 15 can be completely superimposed, that is superimposed for their entire extension, or partly superimposed, depending on their shape, the type of blade with which they are coupled, etc..

The load sensor S represented in Figures 1-8 comprises two spacers 7 and 8 having the function of facilitating assembly of the sensor S, in particular with regard to setting the parallelism of the structural elements 1 and 2. Alternatively, the elements 1 and 2 can be suitably bent. The spacer 7 has the function of separating the lower portions 14 and 15 on a vertical plane, preferably along the vertical direction relative to the movement of the structural element 2. Alternatively, the lower engaging portions 14 and 15 can have one end with a shape functionally equivalent to the shape of the spacer 7.

The shape of structural elements 1 and 2 can be different depending on the use for which the sensor S is intended. For the same reasons, the sensor S can be equipped with other blades besides those 4 and 5 provided in the embodiment shown. For example, the sensor S can be provided with two parallel pairs of blades, an upper pair and a lower pair.

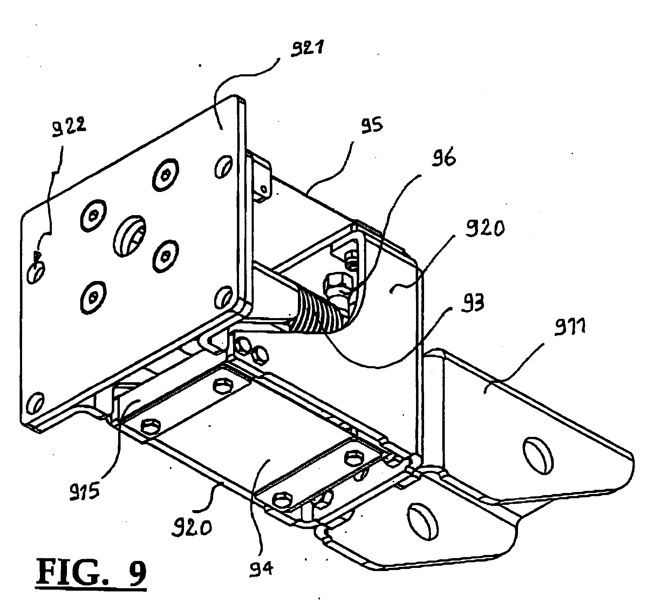

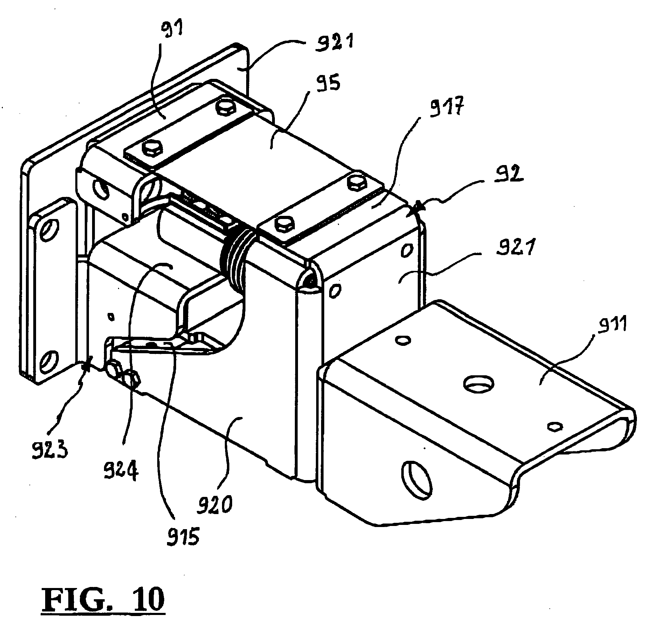

Figures 9, 10 and 11 show an embodiment for use with heavy weights. In this embodiment the numerical references are similar to those used in figure 1-8 with 9 as a prefix. The embodiment of figures 9-11 is made of metal sheets cut and bent, without any welding.

More particularly, the upper portions 916 and 917 of the two structural elements 91 and 92 of sensor S' are shaped identically to corresponding upper portions 16 and 17 of the above disclosed sensor 5. A blade, i.e. a lamina or flexible element, 95 extends from portion 916 to portion 917 and is secured thereto.

Structural element 91 is provided with a lower portion 914 that, as in sensor 5, extends substantially parallel to upper portions 916 and 917, so that upper portion 917 is partly superimposed to lower portion 914. Lower portion 914 corresponds to portion 14 of the previously disclosed embodiment and is the engaging portion for the lower blade or lamina 94, portion 914 is provided with an integral extension comprising a vertical part 918 and an horizontal part 919 that replace the spacer of the previously disclosed embodiment.
Structural element 92 has no horizontal lower portion, this portion is replaced by two sides, i.e. lateral walls, 920 and a block 915 transversely extending between the two side walls 920. Side walls 920 are preferably integral with the upper portion 917 and front portion 921, are L-shaped and extend laterally to α position that is below the upper portion 916. Here, i.e. at the end of walls 920, block 915 is secured to said walls to provide the lower engaging portion 915 for blade 94. Because of this arrangement, the lower blade 94 is external to engaging portions 919 and 915, this resulting in an easier and quicker assembly of the sensor.
As in the embodiment of figures 1- 8, engaging means 915 of second element 92 is positioned below both lower and upper engaging means 914 and 916 of first element 91. Lower engaging means 914 and extension 918-919 are located below upper engaging means 917 of second element 92.

To further reinforce the structure, element 91 is secured by bolts and nuts to a base plate 921, that is provided with means (e.g. bores 922) for being attached to the final apparatus. On plate 921 is provided a bent element 923 that extends from one side to the other side of the sensor and comprises a flat horizontal portion 924 on which is positioned the load cell 93.

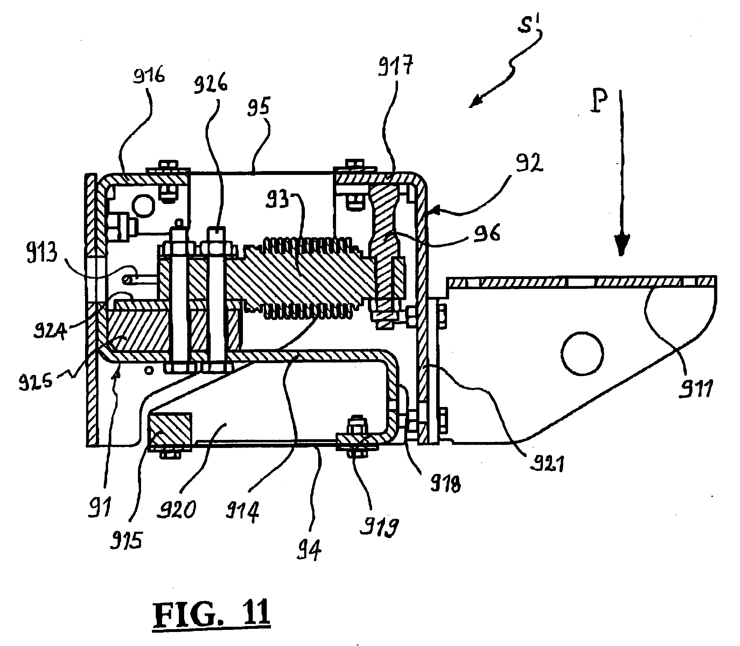

As shown in fig. 11, a block 925 is located between flat part 924 and the portion 904 of structural element 91. Load cell 93 is secured to element 91 together with element 923 and block 925 by means of bolts and nuts 926.

Sensor S' operates in the same way as sensor S. When a load P is applied to shelf, i.e. to the load supporting member, 911 blades 95 and 94 flex and only normal forces applied to the structure are transmitted to cell 93 by feeler 96.

Preferably, all the components of the invention sensor are made of metal. In order to satisfy the requirements of health and hygiene regulations relative to systems for the processing of food or biodegradable substances, or the like, the metal is preferably steel. For example, structural elements, spacers, blocks and additional elements can be produced in stainless steel of the type corresponding to the standard AISI 304 or to the standard AISI 400. The blades 4 and 5 can be obtained from laminates in annealed steel, through laser cutting processes. Any screws and bolts are also preferably made of stainless steel.

The blades (4, 5, 94 and 95) have preferred thickness within the range from 0.1 to 1 mm. Thanks to the use of steel plates or sections, the structural elements can be very compact without reducing the performances of the sensor. In the shown embodiment the sensor is approximately 150 mm long, approximately 120 mm high and approximately 70 mm wide.

The load cell (3, 93) can be of different types according to the uses for which the sensor is intended. In the case shown, the cell 3 is of the SHB type and has a sensitivity of 2±0.02 mV, with a precision class given by 3000 divisions.

The sensor of the invention can measure the weight of variable loads within the range from 5 to 200 kg. Whilst the average use is for ranges of 20 kg to 50 kg, the sensor can be set to measure weights much larger or much smaller than these values. For example, the sensor can be used to measure the weight of a load of coal being moved on a conveyor belt. In this case the sensor will be associated with a roller station of the moving system and will be provided with a load cell suitable to measure substantial weights, for example 200 kg. When the sensor is used to measure the weight of a lighter load, the load cell will have different specifications and will be adapted to measure smaller weights, for example 5 kg.

The sensor (S and S') of the invention has the remarkable advantage of allowing simple installation on pre-existing machinery without the need for work by specialized technicians. In practice, the sensor can be sold directly to the customer who can perform installation alone, thanks to the extremely simple construction, light weight and reduced overall dimensions of the sensor. The sensor can be used both in the conventional sectors relative to moving materials such as stones, coal, gravel, etc., and in those sectors relative to the processing of food or biodegradable substances, etc., without it being necessary to modify one or more parts of said sensor to adapt it to the different needs of the various systems.

## Claims

1. A load sensor of the type comprising:
- a first rigid structural element (1, 91), securable to an external body,
- a second rigid structural element (2, 92) connected to said first structural element (1, 91) through at least two flexible elements (4, 5, 94,95), said second structural element (2, 92) being movable with respect to said first structural element (1, 91) on an essentially vertical plane, in response to the weight (P) of a load to be measured, transmitted to said second structural element (2, 92),
- α load cell (3, 93) secured to said first structural element (1, 91) and functionally associated with said second structural element (2, 92), said load cell supplying an electrical signal which is a function of the stress transmitted by said second structural element (2. 92).
**characterized in that**
said first structural element (1, 91) and said second structural element (2,92) are produced with plates or sections, and a first flexible element (4,94) of said at least two flexible elements (4,5, 94,95) is coupled to corresponding engaging portions (14, 15, 914,915) of said first (1, 91) and of said second (2, 92) structural element, said engaging portions (14,15, 914,915) being at least in part superimposed and spaced apart along said essentially vertical plane.

2. A load sensor as claimed in claim 1, **characterized in that** said first structural element (1, 91) and said second structural element (2, 92) are shaped so that, when coupled, the portions of said at least two flexible elements coupled to said first structural element (1, 91) are fixed and the portions of said at least two flexible elements coupled to said second structural element (2, 92) move on said vertical plane essentially by the same amount.

3. A load sensor as claimed in claim 3, wherein a second flexible element (5, 95) of said at least two flexible elements (4,5, 94,95) couples together the upper portions (16, 17), essentially opposed, of said first (1, 91) and of said second (2,92) structural element, said first flexible element (4,94) and said second flexible element (5,95) being mounted parallel, said first structural element (1,91) and said second structural element (2,92) being coupled opposed.

4. A load sensor as claimed in claim 2, wherein said first structural element (1) and said second structural element (2) have, on said vertical plane, a C-shaped profile.

5. A load sensor as claimed in claim 4, wherein at least one metal spacer (7,8) is located between said first flexible element (4) and each of said first and second structural elements (1, 2).

6. A load sensor as claimed in any claim 1 to 3, wherein said lower engaging portion (914) of said first structural element (91) is provided with an extension (918,919) to which said flexible element (94) is secured, said second structural element (92) comprising side walls (920) and lower engaging portion comprising a block (915) transversely extending between said side walls (920).

7. A load sensor as claimed in any one of claims 1 to 6, wherein said first and second structural elements (1, 2, 91.92) are made of steel.

8. A load sensor as claimed in any one of claims 1 to 6, wherein said metal is resistant to detergents, solvents and to jets of pressurized fluids.

9. A load sensor as claimed in claim 7, wherein the steel is stainless steel, according to standard AISI 304 or AISI 400.

10. A load sensor as claimed in any previous claim, wherein said flexible elements (4, 5, 94,95) are annealed steel blades obtained through laser cutting processes.

11. A load sensor as claimed in any claim from 2 to 10, wherein said load cell (3,93) is cantilever coupled to said first structural element (1, 91), in correspondence to its central portion, parallel to its lower (14, 914) and upper (16, 916) portions, and is provided with a feeler (6,96) suitable to transfer the stresses transmitted to said second structural element (2,92) to the load cell (3,93).
